# NEW EUROPEAN PATENT SPECIFICATION

(11) **EP 2 959 807 B2**
(45) Date of publication and mention of the opposition decision: **30.09.2020**
(45) Mention of the grant of the patent: 22.03.2017
(21) Application number: 14713942.2
(22) Date of filing: 19.02.2014
(51) Int. Cl.: A47J 31/00

(54) **BEVERAGE PREPARATION MACHINE WITH ENERGY STORAGE MEANS**
GETRÄNKEAUTOMAT MIT VORRICHTUNG ZUM ENERGIESPEICHERN
MACHINE DE PREPARATION DE BOISSONS AVEC ACCUMULATEUR D'ENERGIE

(30) Priority: 20.02.2013 PT 10679313
(43) Date of publication of application: 30.12.2015
(73) Proprietor: Novadelta-Comércio e Industria de Cafés, Lda., 1950-041 Lisboa (PT)
(72) Inventor: NABEIRO, Rui Miguel, 7370-112 Campo Maior (PT)
(74) Representative: Zimmermann, Tankred Klaus
(86) International application number: PCT/PT2014/000013
(87) International publication number: WO 2014/129916

(56) References cited:
- WO-A1-2006/102980
- WO-A1-2009/023712
- WO-A1-2010/015427
- DE-A1- 19 643 319
- JP-A- 2005 110 835
- US-A1- 2005 199 130
- US-A1- 2007 193 451

## Description

### Field of the invention

The present invention refers to the field of the machines for preparation of beverages by means of extraction of an edible product, such as for example machines of espresso type coffee, in general, and to the respective configuration as portable machines including the integration and use of energy storage means, in particular.

### Background of the invention

The generality of machines for obtaining aromatic beverages by means of heating of an edible substance, such as for example espresso type coffee, operates based upon the supply of electricity thereto. The possibility of such a machine operating autonomously from a fixed power grid presents several advantages to certain types of portable use. In this sense, there are known several solutions in the prior art relating to machines for obtaining aromatic beverages comprising energy, notably electricity storage devices for example in the form of electrochemical batteries. In fact, there are solutions known for portable coffee machines (e.g., DE 19609428 A1, DE 19643319 A1, US 6,123,010, US 7,966,972 B2, EP 2177138 A1, US 2010/0098823 A1, WO 2011/054522 A1) and for manual trolleys including this type of machines (e.g., WO 00/21790, CH 699674 A2).

The integration of energy storage means faces particular problems in the case of beverage preparation machines based upon the extraction of individual doses and configured so as to be portable, i.e. with reduced dimensions, and presenting an extraction device disposed in the front part and a water supply reservoir in the posterior part, due to the spatial and functional constrains posed by the dimensions, weights and heat transfer between at least some of these machine components.

In fact, in the case of most technologies available in the market based upon an electrochemical process, the operation of the electricity storage devices requires certain temperature conditions. In general, a greater efficacy of heat dissipation and a reduced thermal exposure to adjacent heat sources is advantageous to the efficiency and duration of said energy storage devices.

Moreover, the integration of this type of electrical energy storage devices in machines for the preparation of beverages raises several constructive and functional questions, notably in terms of the required construction volume and complexity, of the weight distribution in the machine, as well as of the associated flexibility and easy of use.

The document WO 2006/102980 A1 proposes a machine for preparation of aromatic beverages of autonomous operation that includes a low voltage electricity storage device, and the document US 2007/0193451 A1 discloses a coffee machine whereby a respective base includes a battery compartment that can house a plurality of batteries.

None of the aforementioned documents discloses a solution in view of the configuration and disposition of the electricity storage means, in view of maximizing the energy efficiency, construction simplicity and functionality associated with a portable machine of autonomous use from a respective fixed electricity grid.

### Summary description of the invention

The goal of the present invention is to provide a machine for preparation of beverages presenting a machine chassis, a fluid supply reservoir for water, disposed in a posterior zone along the machine depth direction and an extraction device provided in a front zone along said machine depth direction and adapted for extraction of at least one aromatic substance, such as for example coffee, tea and similar, provided for example in an individual portion of the pod or capsule type, by means of a flow of said fluid under pressure and that provides the possibility of autonomous operation in energy terms and of more efficient use, in particular in view of a better weight distribution and general balance of the beverage preparation machine, and in view of a better thermal conditioning and easy of use of respective energy storage means in said beverage preparation machine.

This goal is attained according to the present invention by means of a machine according to claim 1. Therefore, the at least one energy storage means is disposed between the fluid supply reservoir and the extraction device along the machine depth direction, in particular so that its weight is distributed in a balanced manner at least along the machine depth direction, preferentially including when considering the maximum reference weight of the fluid in the fluid supply reservoir. According to an embodiment, it is preferred when the energy storage means are provided in a central zone along said depth direction, and inferior zone of the beverage preparation machine, and in greater relative proximity of the fluid heating means than of said extraction device along said depth direction.

According to another preferred embodiment, said energy storage devices are provided in particular so that they are distanced and/or at least for their most part below of said fluid heating mean in said machine.

According to an inventive aspect, the energy storage means are provided so that they present a volume with an elongated format, with at least one dimension greater that the other two dimensions, and are disposed so that the biggest dimension extends along a substantially vertical direction.

According to a preferred embodiment, the energy storage means are configured so that they present a volume with an elongated format, preferentially planar or similar, with two dimensions greater than a third, and are disposed so that said two bigger dimensions develop respectively along at least most part of the cross extension of said beverage preparation machine, in particular so that said volume occupies a minimum extension along said depth direction of the machine.

According to another preferred embodiment, the energy storage means are provided, at least for their most part, below of the fluid heating means so as to reduce the heat gains arising from these.

According to another embodiment, in view of regulating the thermal conditions surrounding the energy storage means, it is preferentially provided a thermal insulation element in an intercalate position between said energy storage means and the fluid heating means so as to reduce heat gains arising from the latter, in particular in the case of normal ambient temperatures, whereby said insulation element is preferentially additionally provided so that it may be optionally removed from said intercalate position in the case of reduced ambient temperatures, notably below 10 °C.

According to another preferred embodiment, there are provided natural ventilation means in the machine chassis, preferentially provided so that they can be actuated, for example optionally.

According to another preferred embodiment, the energy storage means are disposed in a zone proximal to the inside face of the beverage preparation machine and with an element providing access to said energy storage means.

According to another preferred embodiment, said energy storage means present a relation of outside surface area to volume that is greater than 5, preferentially greater than 6, more preferentially greater than 7.

According to another preferred embodiment, the energy storage means are adapted and disposed so that they can be accessed, and eventually replaced, from the outside of the machine chassis of the beverage preparation machine.

According to another preferred embodiment, the energy storage means are provided as a single piece or as a plurality of pieces, so that they can be removed and replaced in their totality or in part.

According to another preferred embodiment, the energy storage means and/or the fluid supply reservoir and/or the machine chassis with at least one optical and/or sound indicator of the charge level of the, at least one, energy storage device.

According to another preferred embodiment, the energy storage means are provided with a temperature sensor in operational connection with a control device of the beverage preparation machine.

According to another preferred embodiment, the energy storage means present at least one, preferentially several energy storage cells provided in functional connection with each other.

In the present invention, it is considered that the energy storage means correspond to any device with possibility of temporary storing electricity, in particular those devices operating based upon an electrochemical and/or electromagnetic energy conversion process, in particular at low voltage.

The machine for preparation of beverages carries out a process including the heating of at least one processing fluid up to a temperature of at least 50 °C and/or the compression of at least one processing fluid up to a pressure of at least 8 bar.

The machine for preparing beverages according to the present invention may be used for preparing coffee, milk, tea and similar beverages, and in said preparation there can be used water, milk, coffee, and similar, as processing fluid.

### List of Figures

The invention shall now be explained in greater detail based upon preferred embodiments and in the Figures in annex.

The Figures show:
- Figure 1:: schematic representations in side view cut, in front view and in top view, respectively, of a first embodiment of a machine according to the invention;
- Figure 2:: schematic representations in side view cut, in front view and in top view, respectively, of a second embodiment of a machine according to the invention;
- Figure 3:: schematic representations in side view cut, in front view and in top view, respectively, of a third embodiment of a machine according to the invention.

### Description of embodiments of the invention

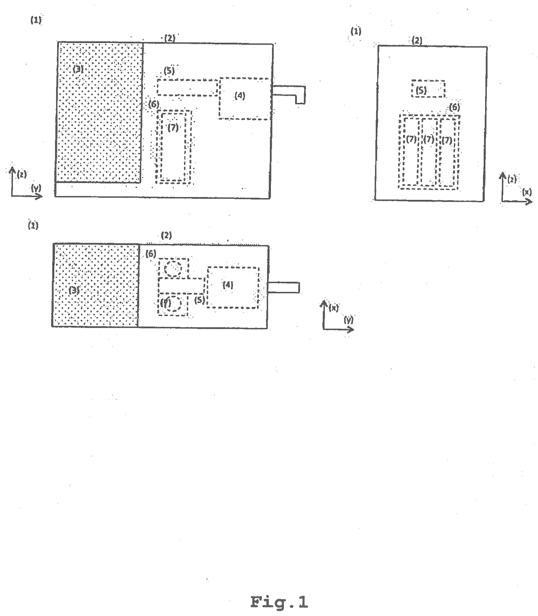

Figure 1 presents a side view in cut on the top left corner, a front view on the top right corner and a top view on the bottom left corner. In the drawings there is represented a first embodiment of a machine (1) for preparing beverages according to the invention and that comprises a machine chassis (2), a fluid supply reservoir (3) for water, disposed in a posterior zone of the machine along the depth direction (y) thereof, an extraction device (4), adapted for extraction of a dose of at least one aromatic substance and disposed in a front zone of the machine along said depth direction (y) thereof, and in this case provided for illustrative purpose inside of the machine chassis (2), fluid heating means (5) of the fluid to be supplied to the extraction device (4), and eventually means for connecting to an external electricity supply source (not represented).

According to the invention, the machine (1) presents energy storage means (6), such as for example electrochemical batteries, disposed in the beverage preparation machine (1) so that they result at least approximately distributed in weight at least along the depth direction (y) of the machine (1), in particular when considering the fluid weight in the fluid supply reservoir (3). In this sense, according to a first inventive aspect, the energy storage means (6) are disposed between the fluid supply reservoir (3) and the extraction device (4) along said depth direction (y) of the machine, so that its weight results distributed in a balanced manner at least along said depth direction (y) of the machine (1).

According to a second inventive aspect, the energy storage means (6) are disposed in a central zone of the beverage preparation machine (1) along said depth direction (y), in particular in the proximity of the respective gravity center, preferentially in closer proximity to the fluid heating means (5) than of said extraction device (4) along said depth direction (y).

In particular, according to another preferred embodiment of the present invention, the energy storage means (6) are disposed at least for their most part below the fluid heating means (5) so as to minimize the heat gains arising from the fluid heating means (5). According to another preferred embodiment, there are provided thermal insolation means (not represented) between the energy storage means (6) and the fluid heating means (5) so as to reduce the heat gains and thereby ensure better operation conditions for said energy storage means (6). It is preferred when said thermal insolation element is provided so that it can be optionally removed from said intercalate position, for example in the case of very reduced ambient temperature.

As further represented, said energy storage means (6) are preferentially provided in the inferior zone of the machine (1), so as to reduce the height of the respective gravity center.

According to another preferred aspect, the energy storage means (6) are provided as a single piece or as a plurality of pieces, so that they can be removed in their totality or in part. According to another preferred aspect, the energy storage means (6) present at least one, preferentially several storage cells (7) in functional connection with each other.

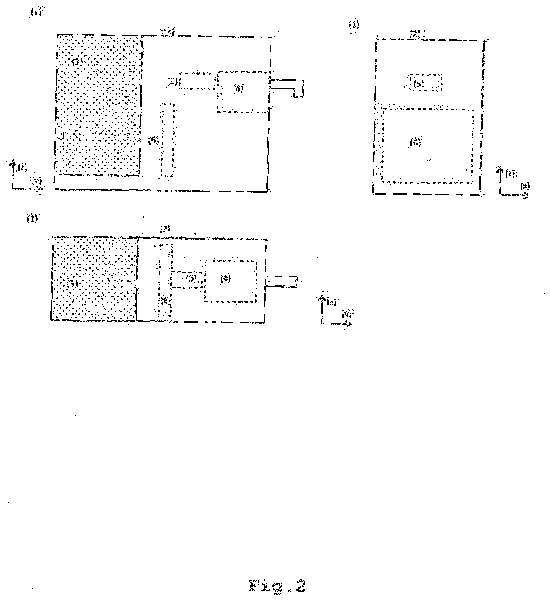

Figure 2 shows a second embodiment according to the present invention, in views similar to those of Figure 1. In this case, the energy storage means (6) are provided in a substantially planar format when compared to the previous embodiment, so that two respective characteristic dimensions are substantially bigger than the third. For example, the width along the cross direction x and the height along the vertical direction z are much bigger than the depth along the depth direction y.

Moreover, according to a preferred embodiment, the energy storage means (6) are also disposed along a vertical orientation so as to reduce the space requirements inside of the machine chassis (2) along the depth direction (y), and at least partially below the fluid heating means (5). This configuration and relative disposition allows increasing the dissipation of thermal energy by the energy storage means (6) and simultaneously reducing the heat gains resulting from their proximity to the fluid heating means (5).

According to another preferred aspect of the invention, there are provided ventilation means (not represented) in the machine chassis (2), for example in the form of a plurality of grid openings or of a mesh, so as to promote the heat dissipation by the energy storage means (6). These natural ventilation elements are preferentially still provided so that they can be optionally actuated, that is, for example set open or set closed so as to allow natural ventilation or not.

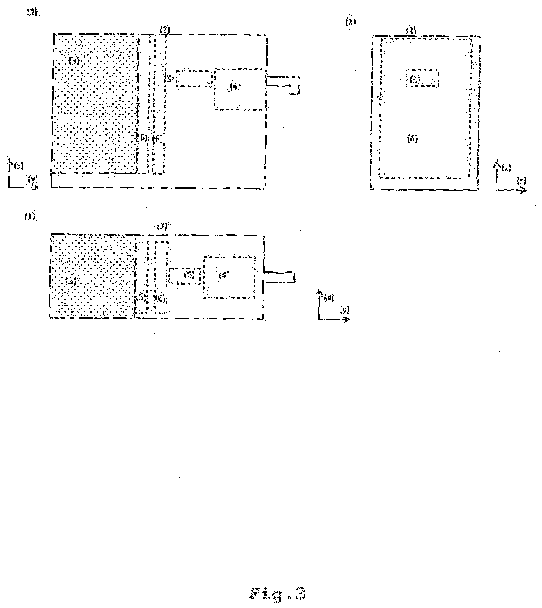

Figure 3 shows a third embodiment of a beverage preparation machine (1) according to the invention. In this case, there are provided two groups of energy storage means (6), whereby one is provided fixed inside of the machine chassis (2) and the other is provided so that it can be removed and in the zone of proximity to the fluid supply reservoir (3).

As it can be observed, the energy storage means (6) in this case an even more planar format than in the preceding embodiments. In fact, according to a preferred embodiment, the energy storage means (6) present a relation of outside surface area to volume greater than 5, preferentially greater than 6, more preferentially greater than 7.

In particular, the energy storage means (6) are disposed so that they now occupy a substantial part of the cross section of the machine chassis (2). Still, they are further disposed so that the most part of their extension is below the fluid heating means (5). According to a preferred aspect, said energy storage means (6) are disposed so that they can be accessed and eventually replaced from the outside of the machine chassis (2) of the beverage preparation machine (1).

According to a preferred aspect, the energy storage means (6) are provided with a temperature sensor in operational connection with a control device of the machine (1).

## Claims

1. Machine (1) for preparation of beverages including espresso type coffee and similar, presenting a machine chassis (2), a fluid supply reservoir (3) disposed in a posterior zone along a depth direction (y) and configured to store water, an extraction device (4) adapted for extraction of an individual dose of at least one aromatic substance and disposed in a front zone along said depth direction (y), fluid heating means (5) provided inside said machine chassis (2), and at least one energy storage means (6) provided inside of said machine chassis (2) and configured to store electricity, **characterized in that**
said, at least one, energy storage means (6) is disposed between said fluid supply reservoir (3) and said extraction device (4) along the depth direction (y) of the machine, so that its weight results distributed in a balanced way at least along the depth direction (y) of the machine (1).

2. Machine (1) according to claim 1, **characterized in that** said energy storage means (6) are disposed in a central zone of the beverage preparation machine (1) along said depth direction (y), in particular in the proximity of the respective gravity center, preferentially in greater relative proximity to the fluid heating means (5) than to said extraction device (4) along said depth direction (y).

3. Machine (1) according to claim 1 or 2, **characterized in that** said energy storage means (6) are provided so as to present a volume with an elongated format with at least one dimension bigger than the other two dimensions, and **in that** they are disposed so that said bigger dimension extends along a substantially vertical direction (z).

4. Machine (1) according to any of claims 1 to 3, **characterized in that** said energy storage means (6) are configured so as to present a volume with an elongated format with two dimensions bigger than a third dimension, and **in that** they are disposed so that said two bigger dimensions respectively extend along at least most part of the cross extension of the beverage preparation machine (1), so that said volume occupies a minimal extension along said depth direction (y).

5. Machine (1) according to any one of claims 1 to 4, **characterized in that** said energy storage means (6) are disposed at a distance and/or at least for their most part below said fluid heating means (5).

6. Machine (1) according to any one of claims 1 to 5, **characterized in that** said energy storage means (6) and said fluid heating means (5) are provided with a thermal insulation element disposed in an intercalate position between both, whereby said thermal insulation element is preferentially provided so that it can be removed from said intercalate position.

7. Machine (1) according to any one of claims 1 to 6, **characterized in that** said machine chassis (2) presents natural ventilation elements adapted for natural ventilation of said energy storage means. (6), preferentially adapted so that they can be actuated.

8. Machine (1) according to any one of claims 1 to 7, **characterized in that** said energy storage means (6) are disposed in a zone proximal to the inside face of the beverage preparation machine (1).

9. Machine (1) according to any one of the previous claims, **characterized in that** said energy storage means (6) are disposed so that they can be accessed, and eventually replaced, from the outside of the machine chassis (2) of the beverage preparation machine (1).

10. Machine (1) according to any one of the previous claims, **characterized in that** said energy storage means (6) are provided as a single piece or as a plurality of pieces, so that they can be removed and replaced in their totality or in part.

11. Machine (1) according to any one of the previous claims, **characterized in that** said energy storage means (6) are provided with a temperature sensor in operational connection with a control device of the machine (1).

12. Machine (1) according to any one of the previous claims, **characterized in that** said energy storage means (6) present at least one, preferentially several storage cells (7) in functional connection with each other.

## Patentansprüche

1. Maschine (1) zur Zubereitung von Getränken einschließlich espressoähnlichen Kaffee und Ähnliches stellt dar ein Maschinenchassis (2), ein Flüssigkeitsvorratsbehälter (3) angeordnet in einer hinten gelegenen Zone entlang einer Richtungstiefe (y) und gestaltet um Wasser zu lagern, ein Extraktionsgerät (4) angepasst zur Extraktion von einer Einzeldosis von mindestens einer aromatischen Substanz und gelegt in einer vorderen Zone entlang genannter Richtungstiefe (y), flüssige Heizmittel (5) versorgt innerhalb gesagtem Maschinenchassis (2) und mindestens einem Energievorratsmittel (6) versorgt innerhalb von genanntem Maschinenchassis (2) und gestaltet um Strom zu lagern,
**gekennzeichnet**
**dadurch, dass** mindestens ein Energievorratsmittel (6) zwischen genanntem Flüssigkeitsvorratsbehälter (3) und genanntem Extraktionsgerät (4) entlang der Richtungstiefe (y) der Maschine, so dass sein Gewicht verteilt zu einer ausgewogener Weise mindestens entlang der Richtungstiefe (y) der Maschine (1) führt.

2. Maschine (1) gemäß Anspruch 1 **gekennzeichnet dadurch, dass** genannte Energievorratsmittel (6) in einer zentralen Zone der Getränkezubereitungsmaschine (1) entlang genannter Richtungstiefe (y) angeordnet sind, insbesondere in der Nähe vom entsprechenden Gravitätszentrum, vorzugsweise in größer relativen Nähe gegenüber der flüssigen Heizmittel (5) als genanntem Extraktionsgerät (4) entlang der Richtungstiefe (y).

3. Maschine (1) gemäß Anspruch 1 oder 2 **gekennzeichnet dadurch, dass** genannte Energievorratsmittel (6) so vorhanden sind, um ein Volumen mit verlängertem Format mit mindestens einer Dimension größer als die zwei anderen Dimensionen darzustellen, und worin sie so angeordnet sind, dass genannte größere Dimension sich entlang einer wesentlich senkrechten Richtung (z) ausdehnt.

4. Maschine (1) gemäß Ansprüche 1 bis 3 **gekennzeichnet dadurch, dass** genannte Energievorratsmittel (6) so gestalten sind, um ein Volumen mit verlängertem Format mit zwei Dimensionen größer als eine dritte Dimension zu gestalten, und worin sie so angeordnet sind, dass genannte zwei größeren Dimensionen entsprechend entlang mindestens größten Teil der Kreuzerweiterung der Getränkezubereitungsmaschine (1) zu verlängern, so dass genanntes Volumen eine minimale Erweiterung entlang genannter Richtungstiefe (y) belegt.

5. Maschine (1) gemäß Ansprüche 1 bis 4 **gekennzeichnet dadurch, dass** genannte Energievorratsmittel (6) auf einem Abstand und/oder mindestens die Mehrheit unterhalb genanntem flüssigen Heizmittel (5) liegen.

6. Maschine (1) gemäß Ansprüche 1 bis 5 **gekennzeichnet dadurch, dass** genannter Energievorratsmittel (6) und genannter flüssige Heizmittel (5) mit einem thermalen Abschließungselement ausgestattet sind, das in einer eingelagerten Position zwischen beide liegt, wobei genanntes Abschließungselement vorzugsweise so vorhanden ist, um von genannter eingelagerten Position entfernt zu werden.

7. Maschine (1) gemäß Ansprüche 1 bis 6 **gekennzeichnet dadurch, dass** genanntes Maschinenchassis (2) natürliche Lüftungselemente darstellt, angepasst für natürliche Lüftung von genannten Energievorratsmitteln (6), vorzugsweise so angepasst, sie zu betätigen.

8. Maschine (1) gemäß Ansprüche 1 bis 7 **gekennzeichnet dadurch, dass** genannte Energievorratsmittel (6) in einer Zone in der Nähe der Innenseite der Getränkezubereitungsmaschine (1) liegt.

9. Maschine (1) gemäß einer der vorigen Ansprüche **gekennzeichnet dadurch, dass** genannte Energievorratsmittel (6) so angeordnet sind, um zugänglich zu sein und möglicherweise ersetzt zu werden, von der Außenseite des Maschinenchassis (2) der Getränkezubereitungsmaschine (1).

10. Maschine (1) gemäß einer der vorigen Ansprüche **gekennzeichnet dadurch, dass** genannte Energievorratsmittel (6) als Einzelstück oder als eine Vielzahl von Stücken vorhanden sind, so dass sie in ihrer Gesamtheit oder teils entfernt und ersetzt werden können.

11. Maschine (1) gemäß einer der vorigen Ansprüche **gekennzeichnet dadurch, dass** genannte Energievorratsmittel (6) mit einem Temperatursensor in operationaler Verbindung mit einem Kontrollgerät der Maschine (1) vorhanden sind.

12. Maschine (1) gemäß einer der vorigen Ansprüche **gekennzeichnet dadurch, dass** genannte Energievorratsmittel (6) mindestens eine, vorzugsweise mehrere Vorratszellen (7) in funktionaler Verbindung mit aneinander darstellen.

## Revendications

1. Machine (1) pour la préparation de breuvages, comprenant le café de type expresso et similaires, composé d'un châssis de machine (2), d'un réservoir d'alimentation en fluide (3) disposé dans la partie postérieure le long du sens de la profondeur (y) et configuré pour stocker de l'eau, d'un dispositif d'extraction (4) adapté à l'extraction d'une dose individuelle d'au moins une substance aromatique et disposé dans la partie frontale le long dudit sens de la profondeur (y), de moyens de réchauffement de fluide (5) placés à l'intérieur dudit châssis de la machine (2) et au moins d'un moyen de stockage d'énergie (6), situé à l'intérieur dudit châssis de machine (2), et configuré pour stocker de l'électricité
**caractérisé par le fait qu'**au moins un moyen de stockage d'énergie (6) est disposé entre ledit réservoir d'alimentation en fluide (3) et ledit dispositif d'extraction (4) dans le sens de la profondeur (y) de la machine, afin que son poids soit distribué de forme équilibrée au moins dans le sens de la profondeur (y) de la machine (1).

2. Machine (1) selon la revendication 1, **caractérisée par le fait que** lesdits moyens de stockage d'énergie (6) sont disposés dans la partie centrale de la machine de préparation de boisson (1) le long dudit sens de la profondeur (y), notamment à proximité du centre de gravité respectif, de préférence à grande proximité relative des moyens de réchauffement du fluide (5) plutôt que dudit dispositif d'extraction (4) le long dudit sens de la profondeur (y).

3. Machine (1) selon la revendication 1 ou 2, **caractérisée par le fait que** les moyens de stockage d'énergie (6) sont fournis afin de présenter un volume à format allongé avec au moins une plus grande dimension que les deux autres dimensions, et **par le fait qu'**elles soient disposées afin que ladite plus grande dimension s'étende le long d'une direction substantiellement verticale (z).

4. Machine (1) selon une quelconque revendication entre 1 et 3, **caractérisée par le fait que** les moyens de stockage d'énergie (6) sont configurés afin de présenter un volume ayant un format allongé en deux dimensions, plus grandes que la troisième dimension, et **par le fait qu'**elles soient disposés afin que lesdites deux plus grandes dimensions s'étendent respectivement le long de la plupart de l'extension transversale de la machine de préparation de breuvages (1), afin que ledit volume occupe une extension minimale le long dudit sens de la profondeur (y).

5. Machine (1) selon une quelconque revendication entre 1 et 4, **caractérisée par le fait que** les moyens de stockage d'énergie (6) sont disposés à une distance et/ou au moins pour la plupart, en dessous des dits moyens de réchauffement de fluide (5).

6. Machine (1) selon une quelconque revendication entre 1 et 5, **caractérisée par le fait que** les moyens de stockage d'énergie (6) et les dits moyens de réchauffement de fluide (5) sont fournis avec un élément d'isolation thermique, situé en position intercalaire entre les deux, où ledit élément d'isolation thermique est préférentiellement fourni afin qu'il puisse être retiré de ladite position intercalaire.

7. Machine (1) selon une quelconque revendication entre 1 et 6, **caractérisée par le fait que** ledit châssis (2) présente des éléments de ventilation naturelle adaptés à la ventilation naturelle des dits moyens de stockage d'énergie (6), de préférence adaptés de manière à qu'ils puissent être actionnés.

8. Machine (1) selon une quelconque revendication entre 1 et 7, **caractérisé par le fait que** lesdits moyens de stockage d'énergie (6) sont disposés dans une zone proche de la face interne de la machine de préparation de breuvage (1).

9. Machine (1) selon une quelconque revendication antérieure, **caractérisée par le fait que** les moyens de stockage d'énergie (6) sont disposés afin qu'ils puissent être accédés et éventuellement placés de nouveau, à partir de l'extérieur du châssis de machine (2) de la machine de préparation de breuvage (1).

10. Machine (1) selon une quelconque revendication antérieure, **caractérisée par le fait que** lesdits moyens de stockage d'énergie (6) sont fournis en une seule pièce ou en une pluralité de pièces, afin qu'elles puissent être retirées et placées de nouveau totalement ou en partie.

11. Machine (1) selon une quelconque revendication antérieure, **caractérisée par le fait que** lesdits moyens de stockage d'énergie (6) sont fournis avec un capteur de température en connexion opérationnelle avec le dispositif de contrôle de la machine (1).

12. Machine (1) selon une quelconque revendication antérieure, **caractérisée par le fait que** lesdits moyens de stockage d'énergie (6) présentent au moins une, mais de préférence plusieurs cellules de stockage (7) en connexion fonctionnelle entre elle.
